Europäisches Patentamt

European Patent Office

Office européen des brevets

(19)

(11) Publication number: **0 253 803**
**B1**

(12) EUROPEAN PATENT SPECIFICATION

(45) Date of publication of patent specification: **05.07.89**

(21) Application number: **85901635.4**

(22) Date of filing: **15.03.85**

(86) International application number:
**PCT/SE85/00122**

(87) International publication number:
**WO 86/05568 25.09.86 Gazette 86/21**

(51) Int. Cl.⁴: **F 16 L 37/28, F 16 K 3/02**

(54) **SLIDE VALVE AND COUPLER ASSEMBLY.**

(43) Date of publication of application:
**27.01.88 Bulletin 88/04**

(45) Publication of the grant of the patent:
**05.07.89 Bulletin 89/27**

(84) Designated Contracting States:
**AT BE CH DE FR GB LI LU NL SE**

(56) References cited:
**WO-A-82/00698**
**CH-A- 352 205**
**US-A-2 709 090**
**US-A-2 757 941**

(73) Proprietor: **SVENSSON, Jan Axel**
**Solhemsgatan 16**
**S-561 35 Huskvarna (SE)**

(72) Inventor: **Axelsson, Robert**
**Postbox 4010**
**S-561 04 Huskvarna (SE)**
Inventor: **SVENSSON, Jan Axel**
**Solhemsgatan 16**
**S-561 35 Huskvarna (SE)**

(74) Representative: **Ström, Tore et al**
**Ström & Gulliksson AB Studentgatan 1 P.O. Box**
**4188**
**S-203 13 Malmö (SE)**

Courier Press, Leamington Spa, England.

EP 0 253 803 B1

## Description

The invention relates to a slide valve and coupler assembly for controlling fluid flow, comprising a slide valve including a valve housing having a first fluid flow passage, at least one slide valve member, and guide means for guiding the slide valve member between a closed position in which the slide valve member is positioned across and closes off said first passage, and an open position in which this passage is open, and a coupler including a coupler housing having a second fluid flow passage which can be connected to the first passage, the valve housing being displaceable in relation to the coupler housing while uncovering by means of the slide valve member said first passage, to a position in which the first fluid flow passage is connected for fluid flow with the second fluid flow passage and wherein one of the passages engages with its mouth a sealing ring mounted stationarily around the mouth of the other passage.

A slide valve and coupler assembly of this type is described in CH—A—352 205.

The assembly in the first place is intended for use when body fluids are to be emptied or removed from the body, for example when urine is to be collected from incontinent persons, or when fluids for example blood medicaments or other treatment fluids are to be administered to the body as in transfusion, infusion, or peritoneal dialysis (bag dialysis).

The purpose of the invention is to simplify the construction of the slide valve and coupler assembly and to make the use thereof easier without neglecting the requirement of complete sealing between the different elements of the assembly and the possibility of maintaining sterility in relation to the surroundings as well as the person connected in one way or the other to the slide valve and coupler assembly.

In order to achieve this purpose the slide valve and coupler assembly has obtained the characteristics appearing from claim 1, and in order to explain the invention in more detail a number of embodiments thereof wil be described below reference being made to the accompanying drawings in which

Figure 1 is an axial sectional view of the slide valve and coupler assembly in one embodiment with the slide valve in the position for connection with the coupler,

Figure 2 is a plan view from below of the coupler,

Figure 3 is a fragmentary view of the slide valve along line III—III in Figure 1,

Figure 4 is a cross-sectional view along line IV—IV in Figure 1,

Figure 5 is an axial sectional view of a second embodiment of the slide valve and coupler assembly having the slide valve and the coupler separated,

Figure 6 is a view of the coupler along line VI—VI in Figure 5,

Figure 7 is a plan view of the slide valve in Figure 5,

Figure 8 is a view similar to Figure 5 with the elements of the slide valve and coupler assembly in position for interconnection,

Figure 9 is a view similar to Figure 5 with the elements of the assembly interconnected,

Figure 10 is an axial sectional view of a third embodiment of the slide valve and coupler assembly of the invention,

Figure 11 is a cross-sectional view along line XI—XI in Figure 10,

Figure 12 is a cross-sectional view along line XII—XII in Figure 10,

Figure 13 is a cross-sectional view along line XIII—XIII in Figure 10,

Figure 14 is a view similar to Figure 10 having the elements of the slide valve and coupler assembly interconnected,

Figure 15 is an axial sectional view of the slide valve in the embodiment of Figures 10 to 14 with sterile means, and

Figure 16 is an axial sectional view of the coupler of the slide valve and coupler assembly of Figures 10 to 14 with sterile means.

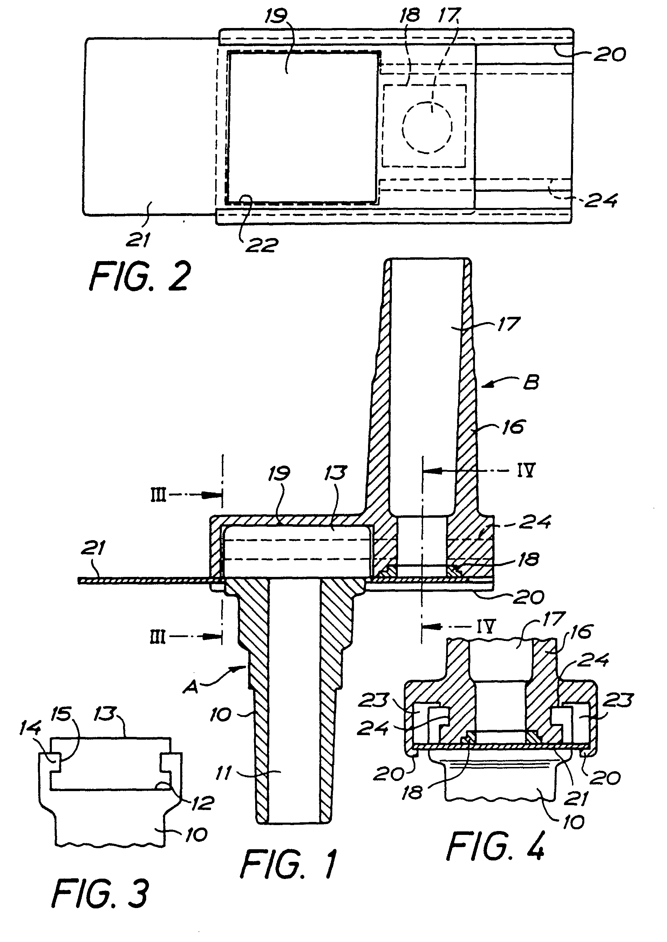

In the drawings the slide valve is indicated generally at A and the coupler is indicated generally at B. In the embodiment of Figures 1 to 4 the slide valve comprises a valve housing 10 forming a passage 11 for fluid flow. The valve housing is shaped for passing a hose thereon with narrow leakproof fit, whereby the passage 11 will be connected with a container or other device, but the valve housing can also form part of a container or other device. The valve housing 10 forms an undercut groove 12 receiving a slide valve member 13 which closes off the mouth of the passage 11. The slide valve member is displaceably guided on ribs 14 facing each other which are received by grooves 15 in the slide valve member 13 so that this member can be displaced between the position shown in Figure 1 which is the closed position, and another position in which the mouth of the passage is uncovered and which accordingly is an open position.

The coupler B comprises a coupler housing 16 having a passage 17 for fluid flow, and also the coupler housing is shaped for passing a hose thereon with leakproof fit. A sealing ring 18 surrounds the mouth of the passage 17. The coupler housing forms a cavity 19 which is shaped and dimensioned so as to receive therein the mouth portion of the slide valve A provided with the slide valve member 13. In the coupler housing there is displaceably guides by means of flanges 20 a thin slide sheet 21 forming an aperture 22 which is shaped and dimensioned in order that the mouth portion of the slide valve A can be passed upwards through the slide sheet into the cavity 19 when the slide sheet is in the position shown with the aperture 22 in register with the cavity 19. Then the slide sheet engages the sealing element 18 and forms a leakproof seal of the mouth of the passage 17. In the coupler housing 16 cavities 23 are provided one at each side of the mouth portion of the passage 17 forming grooves 24 which are positioned such that they are in register with the ribs 14 as a rectilinear extension thereof when the mouth portion of the slide valve A is inserted into the cavity 19, and are dimensioned and shaped so as to receive the ribs 14.

When the slide valve A at the mouth portion thereof has been introduced into the cavity 19 in the coupler housing 16 the slide valve member 13 being in the closed position, the slide valve A can be displaced to the right as seen in Figure 1, the ribs 14 being inserted into the grooves 24 for the interconnection of the slide valve A and the coupler, the slide valve member at the same time being cleared from the slide valve and remains in the cavity 19 wherein the slide valve member 13 is supported by the slide sheet 21 which follows the slide valve A when it is being displaced, and thus will be pulled underneath the slide valve member 13. By displacement of the slide valve A to the right the passages 11 and 17 are brought into register and thus will communicate with each other the sealing element 18 maintaining the seal between the valve housing and the coupler housing 16 in the interface between the two housings. It should be noted that the end surface of the valve housing 10 at the mouth of the passage 11 which can be closed off by means of the valve member 13, and the end surface of the coupler housing 16 at the mouth of the passage 17 which can be closed off by means of the slide sheet 21, never are exposed to the surroundings, transfer of bacteria or impurities between the passages 11 and 17 and the surroundings being prevented thereby.

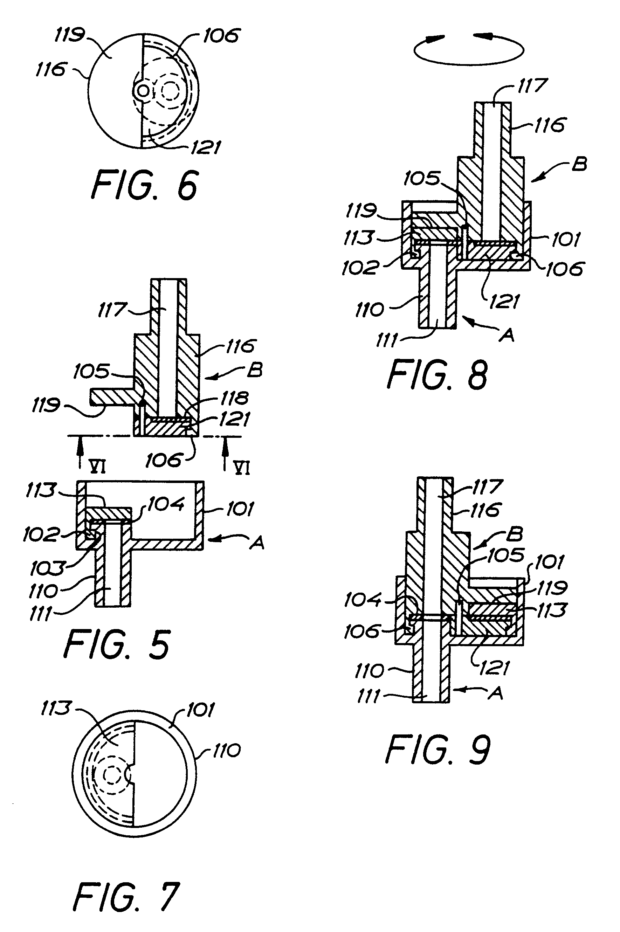

While the interconnection of the two elements the slide valve A and the coupler B, of the slide valve and coupler assembly in the embodiment described with reference to Figures 1 to 4 is effected by linear displacement of the slide valve A in the coupler B, this operation takes place in the embodiment of Figures 5 to 9 by relative rotation of the two elements of the assembly. Referring to Figures 5 to 9 the slide valve A comprises a similar circular slide valve member 113 which is displaceable inside a collar 101 formed by the slide valve housing 110 and is displaceably guided by means of a rib 102 in a guide groove 103 formed by the valve housing 110. Bewtween the end surface of the valve housing 110 at the mouth of the passage 111 formed therein, and the valve member 113 a sealing element 104 is provided.

To the coupler housing 116 forming a passage 117 a semicircular slide sheet 121 is pivotally mounted by means of a pin 105. The slide sheet is arranged so as to close off the mouth of the passage 117 a sealing element 118 being provided between the slide sheet and the coupler housing. The coupler housing 116 forms a recess 119 to receive therein the mouth portion of the slide valve housing 110 and the slide valve member 113 arranged thereon, when the slide valve member is in the closed position.

When the two elements of the slide valve and coupler assembly are brought together as shown in Figure 8 the coupler housing being inserted into the space surrounded by the collar 101 and the mouth portion of the valve housing 110 with the slide valve member 113 being received by the recess 119, the two elements of the assembly can be rotated in relation to each other to the position of Figure 9, the slide sheet 121 being rotated away from the mouth of the passage 117 by means of the slide valve housing 110 and the slide valve member 113 being moved away from the mouth of the passage 111 by means of the coupler B, the two passages being brought into register. Sealing is maintained in the interface between the passages by means of the sealing element 104. The slide valve member 113 and the slide sheet 121 will be positioned one upon the other, and the two elements of the assembly are interconnected by a rib 106 on the coupler housing 116 being inserted into the groove 103 in the valve housing 110, said groove previously receiving the rib 102 on the slide valve member 113. As will be seen the operation is the same as in the embodiment of Figures 1 to 4.

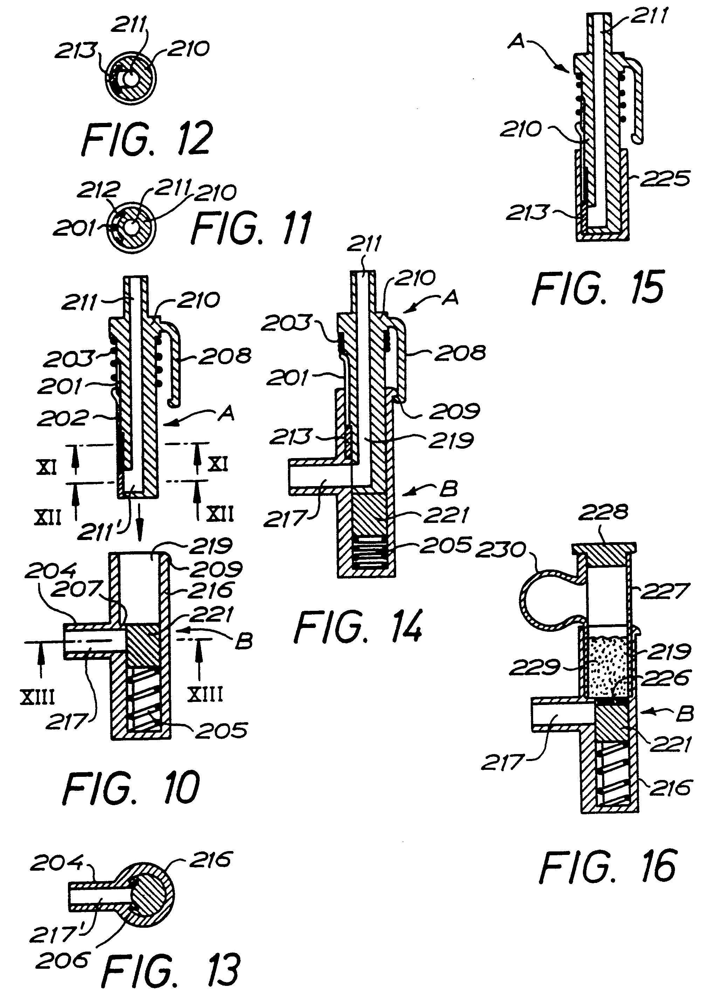

In the third embodiment of the invention which is shown in Figures 10 to 14 to which reference now is made, the two elements of the assembly are arranged for relative axial displacement at the interconnection. The valve housing 210 forms a passage 211 which extends centrally through the valve housing formed as a cylindrical body, and forms an angled mouth portion 211' which opens in the curved surface of the valve housing. The slide valve member 213 is displaceably guided in an undercut groove 212 a groove 201 connecting to groove 212 to receive and guide an arm 202 connected with the slide valve member 213. This arm is biassed by means of a helical spring 203 encircling the valve housing 210, which keeps the slide valve member 213 in the closed position shown in Figure 10 wherein the slide valve member covers the mouth of the passage 211 at the mouth portion 211'.

The coupler housing 216 is also cylindrical and forms an axial cavity 219 a radial passage 217 connecting to said cavity in a socket 204 formed by the coupler housing and projecting therefrom. A slide body 221 is displaceably guided in the cavity 219 said slide body being biassed by means of a helical spring 205 positioned in the passage, to the position shown in Figure 10 wherein the slide body 221 shuts off the connection between the cavity 219 and the passage 217 thereof. The coupler housing 216 forms inside the cavity 219 two ribs 206 received by corresponding grooves in the slide body 221, which form a shoulder 207 at the passage 217. A resilient hook 208 is provided on the slide valve for cooperation with a shoulder 209 on the coupler housing 216.

When the two elements of the assembly, the slide valve A and the coupler B, are brought together the slide valve housing 210 being received by the cavity 219 of the coupler, the slide valve member 213 will be retained by the shoulder 207 and will be moved away from the mouth portion 211' against the bias of the spring 203 the slide body 221 at the same time being depressed to uncover the cavity 219 against the bias of the spring 205. When the hook 208 by snap action engages the shoulder 209 to keep the two elements of the assembly together the mouth portion 211' registers with the passage 217 and thus a connection is established between this passage and the passage 211 in the slide valve housing 210.

Existing sealing elements in the embodiments described — such sealing elements can be provided also in the embodiment of Figures 10 to 14 although they have not been shown therein — can be of such character that they can absorb a disinfectant. For example the sealing element can consist of a resilient porous material. However, a sterile inside environment in the slide valve and coupler assembly at repeated connection and disconnection of the two elements of the assembly also can be maintained by the arrangement shown in Figures 15 to 16. According to Figure 15 a sleeve 225 of bactericidal material is pushed onto the housing 210 of the slide valve A so as to cover the mouth portion of the housing and the slide valve member 213.

In Figure 16 a layer 226 of bactericidal material is provided on the slide body 221. Moreover, a sleeve 227 of bactericidal material is inserted into the cavity 219 said sleeve being provided with a removable lid 228, and a bactericidal substance 229 is received in the sleeve 227. This sleeve forms an expansion space which can receive the substance 229 when the slide valve A is inserted into the coupler B. Instead of being removable the lid 228 can be of such character that it can be punctured by means of the valve housing 210. Analogous arrangements can be provided in the other embodiments of the invention.

**Claims**

1. Slide valve and coupler assembly for controlling fluid flow, comprising a slide valve including a valve housing having a first fluid flow passage, at least one slide valve member, and guide means for guiding the slide valve member between a closed position in which the slide valve member is positioned across and closes off said first passage, and an open position in which this passage is open, and a coupler including a coupler housing having a second fluid flow passage which can be connected to the first passage, the valve housing being displaceable in relation to the coupler housing while uncovering by means of the slide valve member said first passage, to a position in which the first fluid flow passage is connected for fluid flow with the second fluid flow passage and wherein one of the passages engages with its mouth a sealing ring mounted stationarily around the mouth of the other passage, characterized in that the coupler housing comprises a recess adapted to receive the entire slide valve member at the insertion of the valve housing into the coupler housing and for retainment of the slide valve member in this recess when the valve housing is displaced to said position where the passages are connected for fluid flow with a surface of the valve housing moving along the interface between the valve housing and the coupler housing.

2. Slide valve and coupler assembly as claimed in claim 1, characterized in that the valve housing and the coupler housing are interlocked by said displacement.

3. Slide valve and coupler assembly as claimed in claim 1, characterized in that the slide valve and the coupler are rectilinearly displaceable in relation to each other.

4. Slide valve and coupler assembly as claimed in claim 3, characterized in that a slide sheet having an aperture for the insertion of the slide valve into the recess is displaceably mounted on the coupler and is adapted to support the slide valve member in said open position.

5. Slide valve and coupler assembly as claimed in claim 1, characterized in that the slide valve and the coupler are rotatable in relation to each other.

6. Slide valve and coupler assembly as claimed in claim 1, characterized in that the sealing ring is porous to receive a bactericidal substance.

7. Slide valve and coupler assembly as claimed in claim 1, characterized in that a protecting sleeve of a bactericidal material and/or containing a bactericidal substance is provided on the slide valve or on the coupler.

8. Slide valve and coupler assembly as claimed in claim 7, characterized in that the sleeve is provided with a removable lid or with a recloseable lid which can be punctured by means of the valve housing, said lid being made of a bactericidal material.

**Patentansprüche**

1. Schieberventil und Kupplungssatz zur Regulierung von Flüssigkeitsströmungen, bestehend aus einem Schieberventil, beinhaltend ein Ventilgehäuse mit einer ersten Flüssigkeitsströmungspassage, mindestens ein Schieberventilteil und Führungsvorrichtungen zur Führung des Schieberventilteils zwischen einer geschlossenen Position, in der das Schieberventilteil quer über der besagten ersten Passage liegt und diese abschließt, und einer offenen Position, in der die Passage offen ist, und eine Kupplung einschließlich eines Kupplungsgehäuses mit einer zweiten Flüssigkeitsströmungspassage, die mit der ersten Passage verbunden werden kann, wobei das Ventilgehäuse in Relation zum Kupplungsgehäuse verschiebbar ist, wenn die besagte erste Passage mittels des Schieberventilteils aufgedeckt wird, und zwar in eine Position, in der die erste Flüssigkeitsströmungspassage zwecks Flüssigkeitsdurchlaß mit der zweiten Flüssigkeitsströmungspassage verbunden wird, und wobei eine der Passagen mit ihrer Mündung mit einem Dichtungsring in Verbindung steht, der stationär um die Mündung der anderen Passage befestigt ist, gekennzeichnet dadurch, daß das Kupplungsgehäuse eine Aussparung umfaßt die das gesamte Schieberventilteil beim Einsatz des Ventilgehäuses in das Kupplungsgehäuse aufnehmen kann, und die zum Zurückhalten des Schieberventilteils in dieser Aussparung dient, wenn das Ventilgehäuse in besagte Position verschoben ist, in der die Passagen zwecks Flüssigkeitsdurchströmung verbunden sind, wobei sich eine Fläche des Ventilgehäuses entlang der Schnittstelle zwischen dem Ventilgehäuse und dem Kupplungsgehäuse bewegt.

2. Schieberventil und Kupplungssatz nach Anspruch 1, dadurch gekennzeichnet, daß dass Ventilgehäuse und das Kupplungsgehäuse mittels besagter Verschiebung miteinander verriegelt sind.

3. Schieberventil und Kupplungssatz nach Anspruch 1, dadurch gekennzeichnet, daß das Schieberventil und die Kupplung geradlinig in Relation zueinander verschiebbar sind.

4. Schieberventil und Kupplungssatz nach Anspruch 3, dadurch gekennzeichnet, daß ein Schieberblech, das eine Öffnung zum Einsatz des Schieberventils in die Aussparung hat, verschiebbar auf der Kupplung befestigt und angepaßt ist, um das Schieberventil in besagter offener Position zu halten.

5. Schieberventil und Kupplungssatz nach Anspruch 1, dadurch gekennzeichnet, daß das Schieberventil und die Kupplung in Relation zueinander verdrehbar sind.

6. Schieberventil und Kupplungssatz nach Anspruch 1, dadurch gekennzeichnet, daß der Dichtungsring porös ist, um eine bakterizide Substanz aufzunehmen.

7. Schieberventil und Kupplungssatz nach Anspruch 1, dadurch gekennzeichnet, daß eine Schutzhülse aus bakterizidem Material und/oder beinhaltend bakterizides Material entweder am Schieberventil oder an der Kupplung vorgesehen ist.

8. Schieberventil und Kupplungssatz nach Anspruch 7, dadurch gekennzeichnet, daß die Hülse einen abnehmbaren oder wieder zu verschließbaren Deckel aufweist, der mittels des Ventilgehäuses durchbohrt werden kann, wobei der besagte Deckel aus einem bakteriziden Material besteht.

**Revendications**

1. Agencement de robinet-vanne et de coupleur pour contrôler un débit de fluide, comprenant un robinet-vanne avec un corps de vanne ayant un premier passage pour le débit de fluide, au moins un élément de robinet-vanne et un moyen de guidage pour guider l'élément de robinet vanne entre une position de fermeture dans laquelle l'élément de robinet-vanne est disposé en travers dudit premier passage de manière à le fermer, et une position d'ouverture dans laquelle ce passage est ouvert, et un coupleur comprenant un corps de coupleur ayant un second passage pour le débit de fluide qui peut être connecté au premier passage, le corps de vanne pouvant se déplacer par rapport au corps de coupleur en découvrant ledit premier passage au moyen de l'élément de robinet-vanne, pour venir dans une position dans laquelle le premier passage pour le débit de fluide est connecté au second passage de débit de fluide pour permettre le débit de fluide, carctérisé en ce que le corps de coupleur compend un redan disposé de manière à recevoir l'ensemble de l'élément de robinet-vanne lorsque le corps de vanne est inséré dans le corps de coupleur et pour retenir l'élément de robinet-vanne dans ce redan lorsque le corps de vanne est déplacé vers ladite position où les passages sont connectés pour permettre le débit de fluide avec one surface du corps de vanne se déplaçant le long de l'interface entre le corps de vanne et le corps de coupleur, et dans lequel l'un des passages vient au contact par son orifice avec une bague d'étanchéité montée de manière fixe autour de l'orifice de l'autre passage.

2. Agencement de robinet-vanne et de coupleur selon la revendication 1, caractérisé en ce que le corps de vanne et le corps de coupleur sont verrouillés l'un par rapport à l'autre par suite dudit déplacement.

3. Agencement de robinet-vanne et de coupleur selon la revendication 1, caractérisé en ce que le robinet-vanne et le coupleur peuvent se dèplacer l'un par rapport à l'autre en direction rectiligne.

4. Agencement de robinet-vanne et de coupleur selon la revendication 3, caractérisé en ce qu'une feuille à glissière ayant un orifice pour l'insertion du robinet-vanne dans le redan est montée, avec possibilité de déplacement, sur le coupleur et est disposée de manière à supporter l'élément de robinet-vanne dans ladite position ouverte.

5. Agencement de robinet-vanne et de coupleur selon la revendication 1, caractérisé en ce que le robinet-vanne et le coupleur peuvent tourner l'un par rapport à l'autre.

6. Agencement de robinet-vanne et de coupleur selon la revendication 1, caractérisé en ce que la bague d'étanchéité est poreuse et peut recevoir une substance bactéricide.

7. Agencement de robinet-vanne et de coupleur selon la revendication 1, caractérisé en ce qu'un manchon de protection, réalisé en matériau bactéricide et/ou contenant une substance bactéricide, est prévu sur le robinet-vanne ou sur le coupleur.

8. Agencement de robinet-vanne et de coupleur selon la revendication 7, caractérisé en ce que le manchon est pourvu d'un couvercle amovible ou d'un couvercle pouvant être refermé, qui peut être poinçonné par le corps de vanne, ledit couvercle étant réalisé en matériau bactéricide.

EP  0 253 803  B1

FIG. 2

FIG. 1

FIG. 3

FIG. 4

FIG. 6

FIG. 8

FIG. 5

FIG. 9

FIG. 7

2

*FIG. 12*

*FIG. 11*

*FIG. 15*

*FIG. 14*

*FIG. 10*

*FIG. 16*

*FIG. 13*